# EUROPÄISCHE PATENTSCHRIFT

(11) **EP 2 246 501 B1**
(45) Veröffentlichungstag und Bekanntmachung des Hinweises auf die Patenterteilung: **25.01.2017**
(21) Anmeldenummer: 10159581.7
(22) Anmeldetag: 12.04.2010
(51) Int. Cl.: E04F 15/02, E04F 15/10, B32B 15/10, B32B 21/00, F24D 3/14, E04F 15/18

(54) **Fußbodenbelag und Fußbodenpaneel für einen beheizten Untergrund**
Floor lining and floor panel for a heated base
Revêtement de sol et panneau de sol pour un sous-sol chauffé

(30) Priorität: 22.04.2009 DE 102009018181; 10.07.2009 DE 102009032806
(43) Veröffentlichungstag der Anmeldung: 03.11.2010
(73) Patentinhaber: Fritz Egger GmbH & Co. OG, 6380 St. Johann in Tirol (AT)
(72) Erfinder: Pletzer, Stefan, 6391, Fieberbrunn (AT)
(74) Vertreter: Cohausz & Florack

(56) Entgegenhaltungen:
- WO-A1-03/035396
- WO-A1-03/097962
- WO-A1-2008/099011
- WO-A2-2005/049935
- DE-A1-102006 048 471
- FR-A1- 2 341 021

## Beschreibung

Die Erfindung betrifft einen Fußbodenbelag, insbesondere für einen beheizten Untergrund, mit einem mehrschichtigen Aufbau, umfassend eine Mehrzahl von miteinander verbundenen Fußbodenpaneelen, wobei die Fußbodenpaneele eine im Wesentlichen aus einem Holzwerkstoff, einem Kunststoff und/oder einem Holz-Kunststoff-Gemisch gefertigte Trägerplatte und eine darauf angeordnete Beschichtung aufweisen und wobei eine von der Beschichtung der Fußbodenpaneele gebildete obere Schicht vorgesehen ist.

Das Herstellen von Fußbodenbelägen unter Verwendung von Fußbodenpaneelen ist seit geraumer Zeit bekannt. Bei den Paneelen handelt es sich beispielsweise um sogenannte Laminatpaneele. Laminatpaneele weisen in der Regel eine Trägerplatte auf, die mit einem Dekor versehen ist. Das Dekor kann aus einem harzimprägnierten Dekorpapier bestehen. Zusätzlich können Hartpartikel, beispielsweise aus Korund oder anderen mineralischen Materialien, enthalten sein, um die Oberfläche gegen Verschleiß, insbesondere Abrieb und Verkratzen, zu schützen.

Zum Schutz gegen Verschleiß kann aber auch eine zusätzliche Schicht, ein sogenanntes Overlay, auf dem Dekor vorgesehen sein. Ein solches Overlay weist ebenfalls wenigstens ein harzgetränktes Papier auf, das jedoch durchsichtig ist. Als Harz werden insbesondere Melamin- oder Melamin/HarnstoffHarze verwendet. Zur Verbesserung der Abriebfestigkeit kann das Overlay ebenfalls Hartpartikel der genannten Art aufweisen. Das Dekor und das Overlay werden durch Wärme und Druck dauerhaft miteinander verbunden.

Alternativ können die Paneele auch direkt mit einem Dekor bedruckt sein, wobei auf dem Dekor ein transparenter Versiegelungslack oder ein Overlay der zuvor beschriebenen Art vorgesehen ist. Bedarfsweise kann zwischen dem aufgedruckten Dekor und der Trägerplatte eine Grundierschicht vorgesehen sein, die jedoch als Bestandteil des Dekors angesehen werden kann.

Entsprechende Fußbodenbeläge sind vielseitig einsetzbar und weisen eine hohe Haltbarkeit auf. Die Verwendung von Fußbodenpaneelen in Räumen mit einem beheizten Untergrund in Form einer Fußbodenheizung ist ebenfalls möglich. Dadurch wird jedoch die Energieeffizienz der Fußbodenheizung limitiert, so dass mit einem etwas höheren Energieverbrauch zu rechnen ist.

Ein Grund dafür ist, dass die Trägerplatten der Fußbodenpaneele regelmäßig aus Holzwerkstoffen, Kunststoff oder einer Mischung aus Holz und Kunststoff gefertigt sind. Überwiegend kommen Faserplatten als Trägerplatten zum Einsatz, bei denen es sich meist um mitteldichte Faserplatten (MDF) oder hochdichte Faserplatten (HDF) handelt. Die Trägerplatten weisen aufgrund der verwendeten Materialien eine begrenzte Wärmeleitfähigkeit auf, so dass der Wärmetransport von der Fußbodenheizung in den zu erwärmenden Raum limitiert wird. Der Wärmetransport in den zu erwärmenden Raum wird zudem dadurch beschränkt, dass die Fußbodenpaneele keinen zu hohen Temperaturen ausgesetzt werden dürfen. So kommt es beispielsweise bei Paneelen mit Trägerplatten aus einem Holzwerkstoff im Falle zu hoher Temperaturen zu einem Übertrocknen der Paneele, was zu unerwünschter Fugenbildung und/oder zu Brüchen in den Oberflächenschichten führen kann.

Aus der WO 03/035396 A1 ist ein Fußbodenbelag nach dem Oberbegriff von Anspruch 1 bekannt, von dem die Erfindung ausgeht.

Der vorliegenden Erfindung liegt dabei das technische Problem zugrunde, einen Fußbodenbelag der eingangs genannten und zuvor näher beschriebenen Art vorzuschlagen, der eine geeignete Wärmeleitung und Trittschalldämmung bereitstellt.

Dieses technische Problem ist bei einem Fußbodenbelag nach Anspruch 1 gelöst.

Mineralische und/oder metallische Materialien weisen im Vergleich zu Holzwerkstoffen und/oder Kunststoffen eine höhere Wärmeleitfähigkeit λ auf. Als mineralische Komponenten kommen insbesondere Sand (λ∼1,4 W/mK), kristalline metamorphe Gesteine (λ∼3,5 W/mK), wie Granit oder Basalt, Sedimentsteine (λ∼2,3 W/mK), wie Sandstein oder Muschelkalk, sowie keramische Materialien in Frage. Als metallische Komponenten sind reine Metalle, wie Kupfer (λ∼380 W/mK) bzw. Aluminium (λ∼200 W/mK), oder Legierungen wie etwa Stahl (λ∼60 W/mK) geeignet.

Werden diese Materialien in eine Schicht des Fußbodenbelags eingebracht, verbessert sich die Wärmeleitfähigkeit des Fußbodenbelags insgesamt. Dabei wird eine entsprechende Komponente in einer Schicht unterhalb der Beschichtung der Fußbodenpaneele und damit unterhalb der oberen Schicht des Fußbodenbelags vorgesehen. Unter der oberen Schicht des Fußbodenbelags sowie der Fußbodenpaneele wird die auf der Trägerplatte vorgesehene Beschichtung verstanden, die aus einer Schicht oder einer Mehrzahl von separaten, jedoch verhältnismäßig dünnen Schichten, wie Dekor, Overlay und/oder Versiegelungslack, bestehen kann.

Die Beschichtung kann, wie zuvor beschrieben, eine mineralische Komponente in Form von Hartpartikeln aufweisen, die im Wesentlichen der Verringerung des Abriebs des Fußbodenbelags dient. Da die die mineralischen Komponente aufweisende Beschichtung sehr dünn und an oder nahe der Oberseite des Fußbodenbelags vorgesehen ist, verbessert die Beschichtung die Eigenschaften des Wärmetransports der Fußbodenpaneele nicht nennenswert.

Die wärmeleitende Schicht ist erfindungsgemäß unterhalb der Beschichtung vorgesehen und damit in geringerem Abstand zum Untergrund angeordnet. Dadurch kann das Temperaturprofil des Untergrunds vergleichmäßigt und infolgedessen der Widerstand, den der Fußbodenbelag dem Wärmetransport entgegensetzt, verringert werden. Zum Beheizen des Untergrunds sind beispielsweise Heizelemente in Form von wasserdurchströmten Rohren vorgesehen, die in einem Estrich angeordnet sein können. Es kommen aber auch Heizelemente in Form von elektrischen Leitern in Betracht, die auf dem Untergrund bzw. dem Estrich verlegt werden. Unabhängig von der Art der Heizelemente sind diese regelmäßig schlangenlinienförmig verlegt. Daher ist die Temperatur oberhalb des Heizelements maximal und umso größer, je langsamer die Wärme an den zu erwärmenden Raum abgegeben wird. Erfolgt dies nicht schnell genug, spricht man von einem Wärmestau. Zwischen den einzelnen Abschnitten des Heizelements herrschen dagegen geringere Temperaturen. Die Wärme wird aufgrund dieses Temperaturprofils nicht gleichmäßig vom Fußbodenbelag an den Raum abgegeben, sondern verstärkt über die unmittelbar oberhalb der Heizelemente angeordneten Bereiche des Fußbodenbelags.

Die Erfindung hat erkannt, dass die wärmeleitende Schicht des Fußbodenbelags nicht nur die Wärmeleitung senkrecht zum Fußbodenbelag, sondern auch parallel zum Fußbodenbelag verbessert. Dadurch wird ein gleichmäßigeres Temperaturprofil des Untergrunds erzielt, weil die Wärme von einem Bereich oberhalb eines Abschnitts des Heizelements in einen Bereich zwischen zwei Abschnitten des Heizelements transportiert wird. Dadurch kommt es insgesamt zu einer Steigerung des Wärmetransports durch den Fußbodenbelag in den zu erwärmenden Raum, der durch den besseren Wärmetransport senkrecht zum Fußbodenbelag weiter gesteigert wird. Letztlich wird eine Verbesserung des Wärmetransports in einer Ebene parallel zum Fußbodenbelag und in einer Richtung senkrecht dazu erreicht.

Eine wärmeleitende Schicht kann durch die Trägerplatten der Fußbodenpaneele gebildet sein. Dies ist zweckmäßig, weil die Trägerplatte verhältnismäßig dick ausgebildet ist und so der Wärmetransport deutlich verbessert werden kann. Außerdem ist die Trägerplatte relativ nahe am Untergrund vorgesehen, was vorteilhaft für die Vergleichmäßigung des Temperaturprofils parallel zum Fußbodenbelag ist. Die mineralische und/oder metallische Komponente kann mehr oder weniger gleichmäßig in der gesamten Trägerplatte verteilt sein. Es kann aber auch vorgesehen sein, dass die mineralische und/oder metallische Komponente bevorzugt im unteren Bereich der Trägerplatte vorgesehen ist, damit das Temperaturprofil näher am Untergrund des Fußbodenbelags in einer Ebene parallel zum Untergrund bzw. zum Fußbodenbelag vergleichmäßigt werden kann. Ist die Trägerplatte im Wesentlichen aus gepressten Holzpartikeln und/oder Holzfasern gebildet, werden diese vor dem Verpressen zunächst zu einem sogenannten Kuchen mit gewünschter Schichtdicke aufgestreut, wobei auch die mineralische und/oder metallische Komponente mit in den Kuchen eingebracht werden kann. Besteht die mineralische und/oder metallische Komponente aus kleineren Partikeln können diese in den Kuchen eingestreut werden.

Alternativ oder zusätzlich kann es zweckmäßig sein, wenn eine wärmeleitende Schicht auf der der oberen Schicht des Fußbodenbelags bzw. der Beschichtung der Fußbodenpaneele abgewandten Seite der Trägerplatte angeordnet ist. Die wärmeleitende Schicht ist also unterhalb der Trägerplatte angeordnet und damit im verlegten Zustand sehr nahe am Untergrund vorgesehen, was für eine Vergleichmäßigung des Temperaturprofils förderlich ist.

Die wärmeleitende Schicht ist erfindungsgemäß als unterhalb der Trägerplatte vorgesehene Schicht der Fußbodenpaneele ausgebildet. Die wärmeleitende Schicht kann in die Fußbodenpaneele integriert sein, was das Verlegen vereinfacht. Es sind keine zusätzlichen Bauteile oder zusätzlichen Verfahrensschritte zum Verlegen des Fußbodenbelags erforderlich.

Um den Aufbau der Fußbodenpaneele zu vereinfachen und synergistische Effekte zu erzielen, ist die wärmeleitende Schicht durch die Trittschalldämmung der Fußbodenpaneele gebildet. Dies wird dadurch erreicht, dass die mineralische und/oder metallische Komponente in eine der Trittschalldämmung dienende Schicht eingebracht wird. Unter einer Gegenzugschicht wird vorliegend eine an der Unterseite der Trägerplatte vorgesehene Laminatbeschichtung mit wenigstens einem harzimprägnierten Papier verstanden. Die Gegenzugschicht dient einem Spannungsausgleich zu dem an der Oberseite der Fußbodenpaneele vorgesehenen harzimprägnierten Dekorpapier und ggf. dem darauf angeordneten sogenannten Overlay. Ein Rückstrich wird ebenfalls zum Spannungsausgleich bei direktlackierten Paneelen an der Paneelunterseite und/oder Unterseite der Trägerplatte vorgesehen. Der Rückstrich wird in der Regel durch einen Lackauftrag erhalten.

Unabhängig davon, ob die wärmeleitende Schicht Teil des Paneels oder Teil weiterer Schichten des Fußbodenbelags ist, kann die mineralische und/oder metallische Komponente in Form einer dispersen Phase in der wärmeleitenden Schicht vorgesehen sein. Die mineralische und/oder metallische Komponente ist also fein verteilt in einer sogenannten kontinuierlichen Phase vorgesehen, wobei die Verteilung homogen oder inhomogen erfolgen kann. Die kontinuierliche Phase kann beispielsweise durch die beleimten Holzfasern einer Trägerplatte, den Klebstoff einer Klebstoffschicht oder das Trittschallmaterial einer Trittschalldämmung gebildet werden.

Alternativ oder zusätzlich kann die mineralische und/oder metallische Komponente als großflächiges Element ausgebildet sein. Insbesondere kann die mineralische und/oder metallische Komponente als Gewebe, Vlies, Gitter oder Folie in der wärmeleitenden Schicht vorgesehen sein. Eine Gitterstruktur kann beispielsweise dann bevorzugt sein, wenn die wärmeleitende Schicht durch die Fußbodenpaneele gebildet wird, d.h. die mineralische und/oder metallische Komponente Teil der Fußbodenpaneele ist. So kann ein dauerhafter Zusammenhalt der verschiedenen Schichten der Fußbodenpaneele sichergestellt werden. Gleiches kann ebenfalls für ein Gewebe oder Vlies gelten. Gewebe oder Vliese eignen sich aber beispielsweise auch zum Einbringen in eine Klebstoffschicht.

Bei einer weiteren Ausgestaltung des Fußbodenbelags ist die wärmeleitende Schicht als Dampfsperre ausgebildet. Beide Funktionen sind dann in einer Schicht zusammengefasst. Die Dampfsperre kann zu diesem Zweck als Metallfolie ausgebildet sein. Es kann aber auch eine mit Kunststoff beschichtete Metallfolie oder eine Kunststofffolie verwendet werden, in die die mineralische und/oder metallische Komponente eingebracht ist. Die Dampfsperre ist in jedem Fall integraler Bestandteil der Fußbodenpaneele, so dass die wärmeleitende Schicht des Fußbodenbelags beim Verlegen der Fußbodenpaneele gebildet wird, ohne dass hierzu weitere Arbeitsschritte durchgeführt werden müssten.

Um die Wärmeleitfähigkeit des Fußbodenbelags weiter zu steigern, ist es bevorzugt, wenn die Trägerplatte eine Dichte von wenigstens 950 kg/m³ aufweist und/oder aus einer hochdichten Faserplatte (HDF) gebildet wird.

Der Wärmedurchgang des Fußbodenbelags wird durch die Verwendung flacher Fußbodenpaneele verbessert. Die Fußbodenpaneele weisen daher etwa eine Dicke von höchstens 6 mm, vorzugsweise höchstens 5 mm, insbesondere höchstens 4 mm auf.

Die Erfindung wird nachfolgend anhand einer lediglich Ausführungsbeispiele darstellenden Zeichnung näher erläutert. In der Zeichnung zeigt
- Fig. 1: einen ersten nicht erfindungsgemäßen Fußbodenbelag in einem auf einem beheizten Untergrund verlegten Zustand in einem vertikalen Schnitt in schematischer Darstellung,
- Fig. 2: eine graphische Darstellung von Profilen der Temperaturverteilung des beheizten Untergrunds unter Verwendung eines erfindungsgemäßen Fußbodenbelags und unter Verwendung eines konventionellen Fußbodenbelags,
- Fig. 3: ein Detail des Fußbodenbelags aus Fig. 1 in einem vertikalen Schnitt,
- Fig. 4: einen zweiten nicht erfindungsgemäßen Fußbodenbelag in einer Schnittdarstellung gemäß Fig. 3,
- Fig. 5: einen dritten nicht nicht erfindungsgemäßen Fußbodenbelag in einer Schnittdarstellung gemäß Fig. 3 und
- Fig. 6: einen vierten nicht erfindungsgemäßen Fußbodenbelag in einer Schnittdarstellung gemäß Fig. 3.

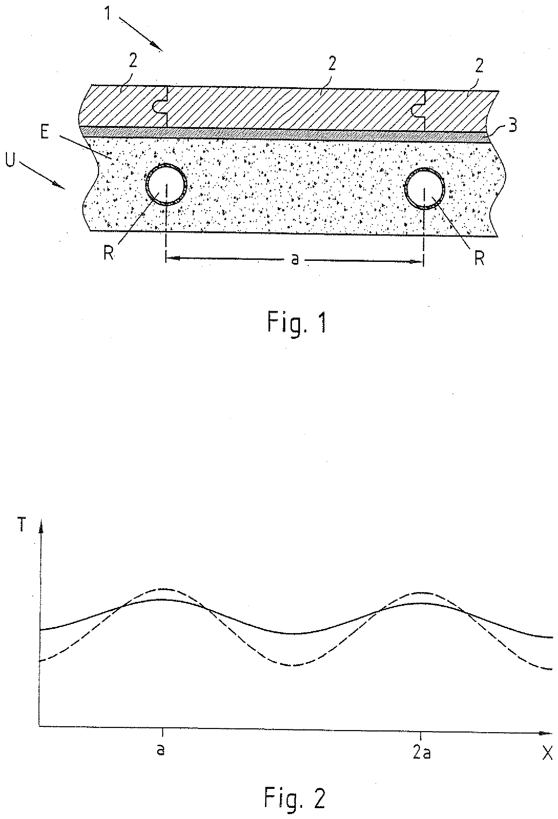

In der Fig. 1 ist ein auf einem beheizten Untergrund U verlegter Fußbodenbelag 1 dargestellt. Der Fußbodenbelag 1 besteht dabei aus einer Mehrzahl von Fußbodenpaneelen 2, die über aus dem Stand der Technik bekannte Verbindungs- und/oder Verriegelungsprofile miteinander verbunden sind. Die Verbindungs- bzw. Verriegelungsprofile sind lediglich schematisch dargestellt, da die Art der Verbindungs- bzw. Verriegelungsprofile vorliegend von untergeordneter Bedeutung ist.

Beim dargestellten Ausführungsbeispiel sind die Fußbodenpaneele 2 rechteckig ausgebildet und sowohl an ihren langen als auch an ihren kurzen Schmalkanten mit weiteren Fußbodenpaneelen 2 das Fußbodenbelags 1 verbunden. Bei den Fußbodenpaneelen 2 handelt es sich um sogenannte Laminatpaneele mit einem entsprechenden, nicht im Einzelnen dargestellten Schichtaufbau. Unterhalb der Fußbodenpaneele 1 ist eine Unterlage 3 vorgesehen.

Der Fußbodenbelag 1 ist auf einem beheizbaren Untergrund U vorgesehen, wobei dieser eine obere Estrichschicht E aufweist, in der ein Rohr R schlangenlinienförmig verlegt ist, das von einem Wärmeträgermedium, bei dem es sich vorliegend um heißes Wasser handelt, durchströmt werden kann.

Das Rohr R weist dabei parallel zueinander verlaufende Abschnitte auf, die jeweils um einen Abstand a voneinander beabstandet sind.

Wenn heißes Wasser durch das Rohr R strömt, erwärmt sich der Untergrund U oberhalb der parallel zueinander verlaufenden Rohrstücke stärker als zwischen diesen Rohrstücken. Ist auf dem Untergrund ein konventioneller Fußbodenbelag vorgesehen, ergibt sich ein Temperaturprofil, wie es schematisch in der in der Fig. 2 dargestellten graphischen Auftragung als gestrichelte Linie eingezeichnet ist. Dabei ist die Temperatur des Untergrunds gegen den Abstand von einem der parallelen Rohrstücke der Fußbodenheizung in einer Richtung senkrecht zu diesem Rohrstück und parallel zum Fußbodenbelag aufgetragen. In den Abständen a, 2a usw. ist die Temperatur jeweils maximal und dazwischen minimal, wobei die Differenz zwischen der maximalen und der minimalen Temperatur erheblich ist.

Ist auf dem gleichen Untergrund ein Fußbodenbelag verlegt, der eine unter der oberen Schicht angeordnete, eine mineralische und/oder metallische Komponente aufweisende wärmeleitende Schicht aufweist, ergibt sich rein qualitativ bei sonst im Wesentlichen unveränderten Randbedingungen ein Temperaturprofil, wie es durch die durchgezogene Linie in der in der Fig. 2 dargestellten graphischen Auftragung dargestellt ist.

Auch in diesem Fall ist die Temperatur oberhalb der parallelen Rohrstücke maximal, während die Temperatur dazwischen minimal ist. Allerdings ist die Differenz zwischen der maximalen und der minimalen Temperatur dieses Temperaturprofils deutlich geringer. Mit anderen Worten ist die Temperatur des Untergrunds gleichmäßiger verteilt, da die mineralische und/oder metallische Komponente der wärmeleitenden Schicht die Wärme von Bereichen oberhalb der parallelen Rohrstücke zu Bereichen dazwischen leitet und so zu einem Temperaturausgleich des Untergrunds bzw. des Fußbodenbelags beiträgt. Dadurch ergibt sich zudem vorzugsweise eine höhere mittlere Temperatur des Untergrunds und/oder des Fußbodenbelags, so dass die Temperaturdifferenz zwischen Untergrund und/oder Fußbodenbelag einerseits und der Raumluft andererseits insgesamt größer und mithin der an die Raumluft abgegebene Wärmestrom erhöht ist.

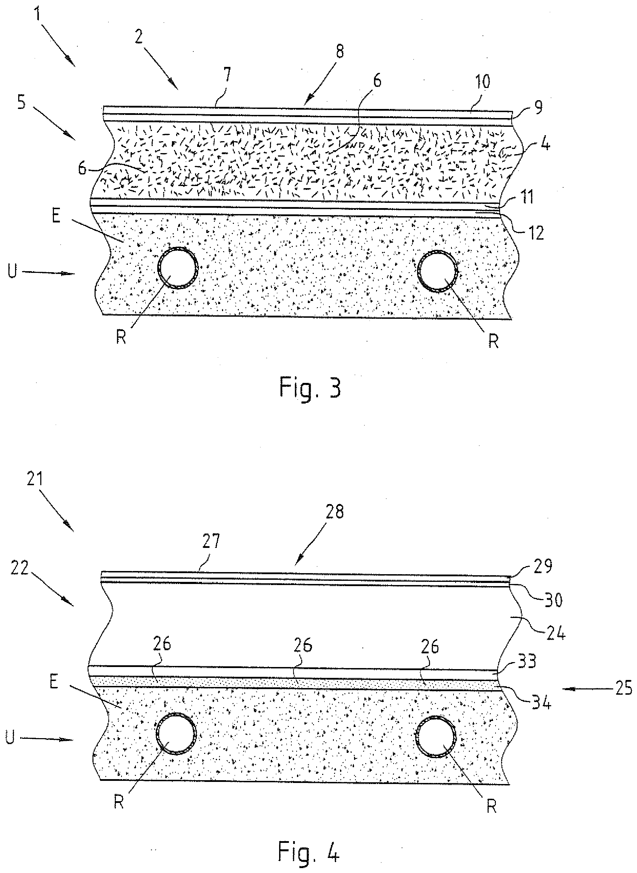

In der Fig. 3 ist ein Detail des Fußbodenbelags 1 aus der Fig. 1 dargestellt. Die Fußbodenpaneele 2 weisen eine Trägerplatte 4 aus einer hochdichten Faserplatte (HDF) auf. Die Trägerplatte 4 bildet gleichzeitig die wärmeleitende Schicht 5 des Fußbodenbelags 1. Dazu sind in der Trägerplatte 4 mineralische Partikel 6 gleichmäßig verteilt vorgesehen. Der Anteil der mineralischen Partikel 6 ist dabei groß genug, um die Wärmeleitung der Trägerplatte 4 insgesamt deutlich zu verbessern.

Auf der Trägerplatte 4 ist eine Beschichtung 7 vorgesehen, die die obere Schicht 8 des Fußbodenbelags 1 bildet und zwei unterschiedliche Lagen aufweist. Unmittelbar mit der Trägerplatte 4 verbunden ist eine Dekorschicht 9 aus einem Melaminharz, in dem ein Dekorpapier vorgesehen ist. Auf dieser Dekorschicht 9 ist ein Overlay 10 angeordnet, das ebenfalls aus einem mit Melaminharz getränkten Papier besteht, jedoch zusätzlich noch fein verteilte, nicht im Einzelnen dargestellte Korundpartikel aufweist.

An der Unterseite der Trägerplatte 4 ist eine Gegenzugschicht 11 aus einem Harz und wenigstens einem darin eingebetteten Spezialpapier angeordnet. Unterhalb des Fußbodenpaneels 2 ist eine Dämmschicht 12 des Fußbodenbelags 1 vorgesehen, die im dargestellten Ausführungsbeispiel nicht mit dem Fußbodenpaneel 2 verbunden und unmittelbar auf den Untergrund U aufgelegt ist.

Der in der Fig. 4 dargestellte Fußbodenbelag 21 umfasst direktlackierte Fußbodenpaneele 22. Diese weisen ebenfalls eine Trägerplatte 24 aus einer hochdichten Faserplatte (HDF) auf. An der Oberseite der Trägerplatte 24 ist eine Beschichtung 27 vorgesehen, die die obere Schicht 28 des Fußbodenbelags 21 bildet und aus einer Dekorschicht 29 und einer Hartpartikel enthaltenden Schutzschicht 30 besteht. An der Unterseite der Trägerplatte 14 ist ein Rückstrich 33 in Form eines Lackauftrags vorgesehen.

Die Fußbodenpaneele 22 des in der Fig. 4 dargestellten Fußbodenbelags 21 sind mittels einer Klebstoffschicht 34 auf dem Untergrund U verklebt. Der Untergrund U weist wiederum eine Estrichschicht E mit einem darin verlegten wasserdurchströmten Rohr R auf. Die Klebstoffschicht 34 dient dabei neben dem Verkleben der Fußbodenpaneele 22 auf dem Untergrund U auch als wärmeleitende Schicht 25 des Fußbodenbelags 21, da die Klebstoffschicht 34 einen Klebstoff mit einer darin fein verteilten mineralischen Komponente 26 aufweist, bei der es sich um Sand handelt.

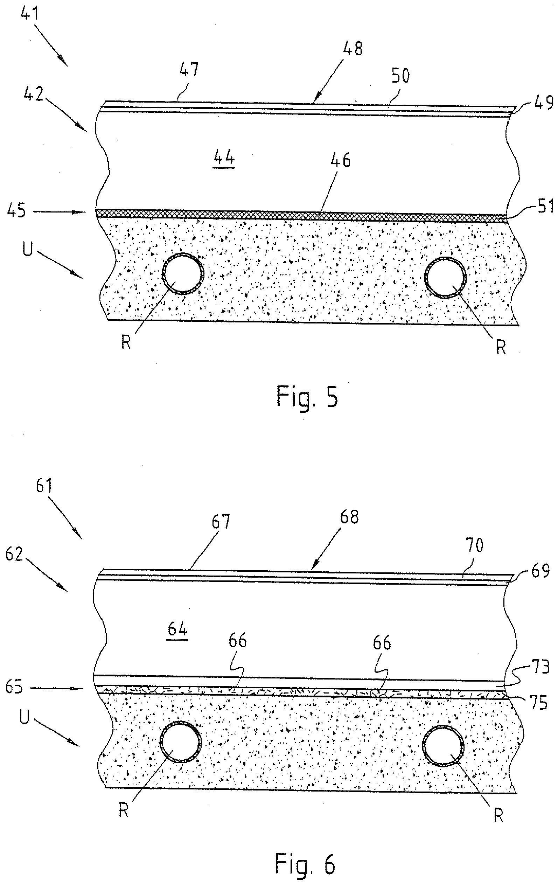

Der in der Fig. 5 dargestellte Fußbodenbelag 41 umfasst Fußbodenpaneele 42 mit einer Trägerplatte, auf der eine Beschichtung 47 vorgesehen ist, bei der es sich um eine Laminatbeschichtung handelt. Die Laminatbeschichtung bildet die obere Schicht des Fußbodenbelags 48 und weist eine Dekorschicht 49 mit einem harzgetränkten Dekorpapier sowie darauf ein Overlay 50 auf, das ein harzgetränktes durchsichtiges Papier umfasst. An der Unterseite der Trägerplatte 44 ist eine Gegenzugschicht 51 vorgesehen, die nicht als Laminatbeschichtung, sondern als Metallfolie ausgebildet ist, welche die metallische Komponente 46 der wärmeleitenden Schicht 45 darstellt. Im dargestellten Ausführungsbeispiel liegt die Gegenzugschicht 51 bzw. die wärmeleitende Schicht 45 unmittelbar auf dem Untergrund U auf.

Der in der Fig. 6 dargestellte Fußbodenbelag 61 umfasst Fußbodenpaneele 62, die eine Beschichtung 67 als obere Schicht 68 des Fußbodenbelags 61 aus einer mit der Trägerplatte 64 verbundenen Dekorschicht 69 und einem darauf angeordneten Overlay 70 aufweist. An der Unterseite der Trägerplatte 64 weist das Fußbodenpaneel 62 einen Rückstrich 73 und eine in das Fußbodenpaneel 62 integrierte Trittschalldämmung 75 auf. Die Trittschalldämmung 75 enthält eine metallische Komponente 66 in Form fein verteilter metallischer Späne, so dass die Trittschalldämmung 75 die wärmeleitende Schicht 65 des Fußbodenbelags 61 bildet.

## Patentansprüche

1. Fußbodenbelag (61), insbesondere für einen beheizten Untergrund (U), mit einem mehrschichtigen Aufbau,
- umfassend eine Mehrzahl von miteinander verbundenen Fußbodenpaneelen (62),
- wobei die Fußbodenpaneele (62) eine im Wesentlichen aus einem Holzwerkstoff, einem Kunststoff und/oder einem Holz-Kunststoff-Gemisch gefertigte Trägerplatte (64) und eine darauf angeordnete Beschichtung (67) aufweisen,
- wobei eine von der Beschichtung (67) der Fußbodenpaneele (62) gebildete obere Schicht (68) sowie eine Gegenzugschicht oder ein Rückstrich (73) vorgesehen ist und
- eine unter der Gegenzugschicht oder dem Rückstrich (73) angeordnete wärmeleitende Schicht (65) in Form einer Trittschalldämmung (75) vorgesehen ist,
**dadurch gekennzeichnet, dass**
- die wärmeleitende Schicht (65) in Form einer Trittschalldämmung (75) eine mineralische und/oder metallische Komponente (66) aufweist.

2. Fußbodenbelag nach Anspruch 1,
**dadurch gekennzeichnet,**
**dass** die mineralische und/oder metallische Komponente (66) in Form einer dispersen Phase in der wärmeleitenden Schicht (65) vorgesehen ist.

3. Fußbodenbelag nach Anspruch 1 oder 2,
**dadurch gekennzeichnet,**
**dass** die mineralische und/oder metallische Komponente als Gewebe, Vlies, Gitter oder Folie in der wärmeleitenden Schicht vorgesehen ist.

4. Fußbodenbelag nach Anspruch 3,
**dadurch gekennzeichnet,**
**dass** die wärmeleitende Schicht als Dampfsperre ausgebildet ist.

## Claims

1. Floor covering (61), in particular for a heated substrate (U) having a multi-layered structure
- comprising a plurality of floor panels (62) connected to each other,
- wherein the floor panels (62) have a support plate (64) made substantially from a derived timber material, a plastic and/or a combination of wood and plastic, and a coating (67) arranged thereon,
- wherein a top layer (68) formed by the coating (67) of the floor panels (62) as well as a stabilising layer or a back coat (73) is provided
and
- a heat conducting layer (65) in the form of impact sound insulation (75) is provided underneath the stabilising layer or the back coat (73),
**characterised in that**
- the heat conducting layer (65) in the form of impact sound insulation (75) has a mineral and/or metallic component (66).

2. Floor covering according to Claim 1,
**characterised in that**
the mineral and/or metallic component (66) is provided in the heat conducting layer (65) in the form of a disperse phase.

3. Floor covering according to Claim 1 or 2,
**characterised in that**
the mineral and/or metallic component is provided in the heat conducting layer as fabric, non-woven material, mesh or foil.

4. Floor covering according to Claim 3,
**characterised in that**
the heat conducting layer is configured as a vapour barrier.

## Revendications

1. Revêtement de sol (61), notamment pour un sol chauffé (U) avec une structure multicouche,
- comprenant une pluralité de panneaux de plancher (62) accrochés les uns aux autres,
- sachant que les panneaux de plancher (62) comprennent une plaque de support (64) essentiellement composée d'un matériau en bois, de plastique et/ou d'un mélange de plastique et de bois et d'un revêtement (67) appliqué dessus,
- sachant que le revêtement (67) des panneaux de bois (62) est formé d'une couche supérieure (68) pour qu'une couche de couverture ou une couche oblique (73) soit prévue
et
- qu'une couche thermo-conductrice (65) formant un isolant sonore (75) agencée sous la couche de couverture ou la couche oblique (73) est prévue,
**caractérisé en ce que**
- la couche thermo-conductrice (65) formant un isolant sonore (75) est constituée d'un composant (66) minéral et/ou métallique.

2. Revêtement de sol selon la revendication 1,
**caractérisé en ce qu'**
il est prévu que le composant (66) minéral et/ou métallique forme une phase dispersée dans la couche thermo-conductrice.

3. Revêtement de sol selon les revendications 1 ou 2,
**caractérisé en ce que**
le composant minéral et/ou métallique prévu dans la couche thermo-conductrice est constitué de tissu, de toison, de grille ou de feuille.

4. Revêtement de sol selon la revendication 3,
**caractérisé en ce que**
la couche thermo-conductrice constitue une barrière contre la vapeur.
